# EUROPEAN PATENT APPLICATION

(11) **EP 0 940 960 A1**
(43) Date of publication of application: **08.09.1999**
(21) Application number: 98410023.0
(22) Date of filing: 02.03.1998
(51) Int. Cl.: H04L 29/06

(54) **Authentication between servers**

(71) Applicant: Hewlett-Packard Company, Palo Alto, California 94304 (US)
(72) Inventor: Le Berre, Philippe, 38500 Voiron (FR)
(74) Representative: Lloyd, Richard Graham

(57) **Abstract**

A user (10) accessing resources on the Internet is often required to change servers (40A,40B) whilst in the middle of what for the user is a single task. For example, the user may have accessed a multi-homed database or may have browsed a catalog on one server (40A) and now needs to go to another (40B) to make payment. As many Internet resources require user authentication, the process of changing servers frequently results in the user having to re-authenticate himself/herself. To overcome this problem the present invention provides that a server (40A) wishing to direct a user (10) to another server (40B) does so by returning ([2]) a URI that has been signed by the first serve r by including a signature in the URI. The user (10) uses this signed URL to access ([3]) the second server (40B). The second server (40B) can then use the signature contained in the URL to confirm that the user (10) has come from the first server (40A) and therefore does not need to be re-authenticated. Information can also be included in the URI and the signature used at the second server (40B) to check its integrity.

## Description

### Field of the Invention

The present invention relates to authentication between servers visited by the same agent such as a browser or server-side program.

### Background of the Invention

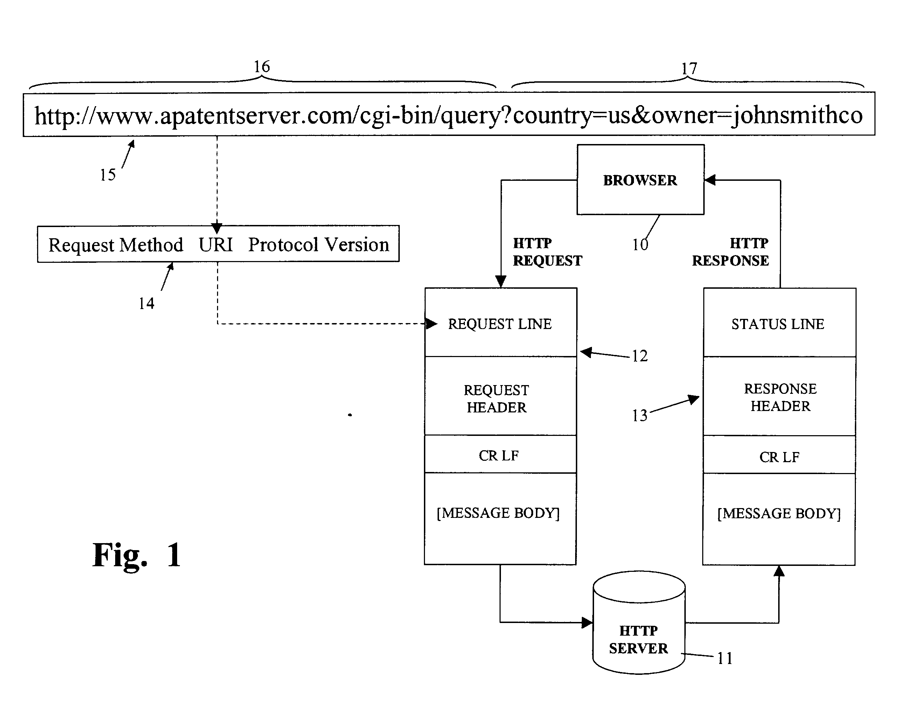

The World Wide Web operating over the Intemet and its intranet equivalents use the HTTP protocol for communicating agents (browsers) with servers. Figure 1 shows the basic request /response messaging mechanism. More particulary, a browser 10 communicates with a server 11 by sending HTTP Requests 12 and receiving back HTTP Responses 13. A Request 12 is made up of a Request Line, a Request Header, a CR LF, and a message body (the latter being optional). A Response is made up of a Status Line, a Response Header, a CR LF, and a message body (again optional).

When the browser wants to access a particular page held on the server 11, it sends a Request 12 with the identity of the desired page being given in the Request Line; the server will then return the requested page in the message body of a Response 13. Where the browser 10 wants to query a database that has a web interface, it will send a Request to the interface, identifying the interface in the request Line (this line may also hold the query data); again the server will return the requested information in a Response 13.

As shown in Figure 1, the Request Line 14 of a Request 12 has three elements, namely a Request Method, a URI (Uniform Resource Identifier), and a Protocol Version. The URI 15 is usually composed of an http_URL 16 that identifies the resource to be accessed, and, optionally, a query 17 which if present is separated from the http_URL by a "?". In the Figure 1 example, the components of the URI 15 have the following values:
- http_URL =: http://www.apatentserver.com/cgi-bin/query
- query =: country=us&owner=johnsmithco

In this example, the browser is making a request to a patent database to return information on any patent matching the query parameters - in this case, two conditions have been set, namely that the patent is for the US ("country=us") and that the patent owner is called JohmSmithCo ("owner=johnsmithco"). The two conditions are separated by an "&" in the query.

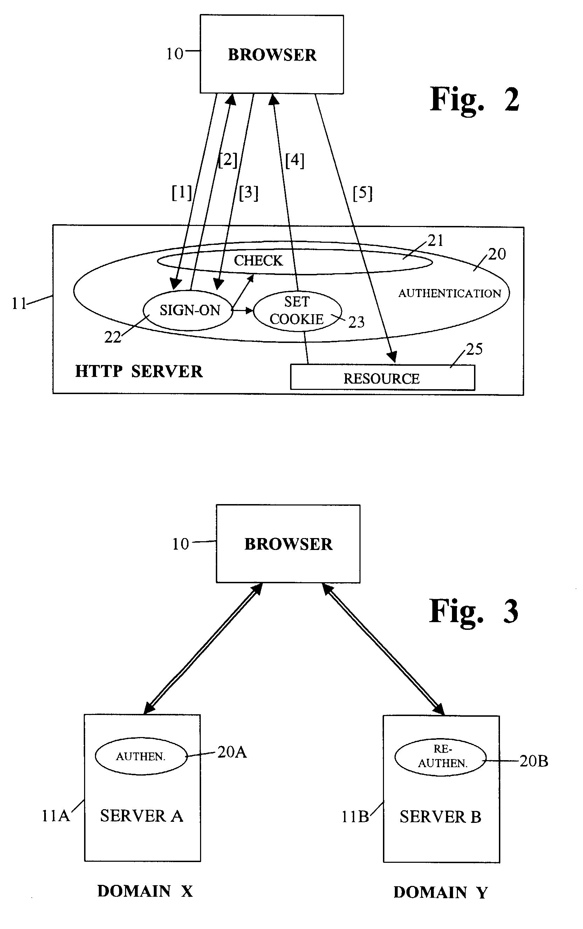

Figure 2 illustrates an application of the "cookie" mechanism that is widely used across the Web. A "cookie"is a piece of information sent by a Web server to a Web browser that the browser software is expected to save and to send back to the server whenever the browser makes additional requests to the server. Cookies contain information such as login or registration information, online "shopping cart" information, user preferences, and the like. When a server receives a request from a browser that includes a cookie, the server is able to use the information stored in the cookie. In the Figure 2 scenario, the server 11 uses cookies to avoid a user having to re-authenticate himself/herself each time the server is visited. More particularly, the server runs an authentication process 20 including a check task 21 that checks each incoming Request [1] intended for a particular resource 25 to see if the Request carries a cookie (in the Request header) that has been previously set by the server 11 and is still valid. If this is the case, the Request is allowed to proceed [5]; otherwise the request is routed to a sign-on task 22 that returns [2] a sign-on form to the user at browser 10. The user completes this form (generally, user ID and pasword) and sends it back [3] to the sign-on task 22 which checks the input data. If the data checks out, a set-cookie task 23 returns [4] a first page of the requested resource in a Response that includes a "set cookie" command with an associated session user-code. The cookie is stored by the browser 10 and included in subsequent Requests [5] to the resource 25; the check task 21 allows such requests through without invoking the sign on program (the check task has access to the session user-codes assigned by the set-cookie task).

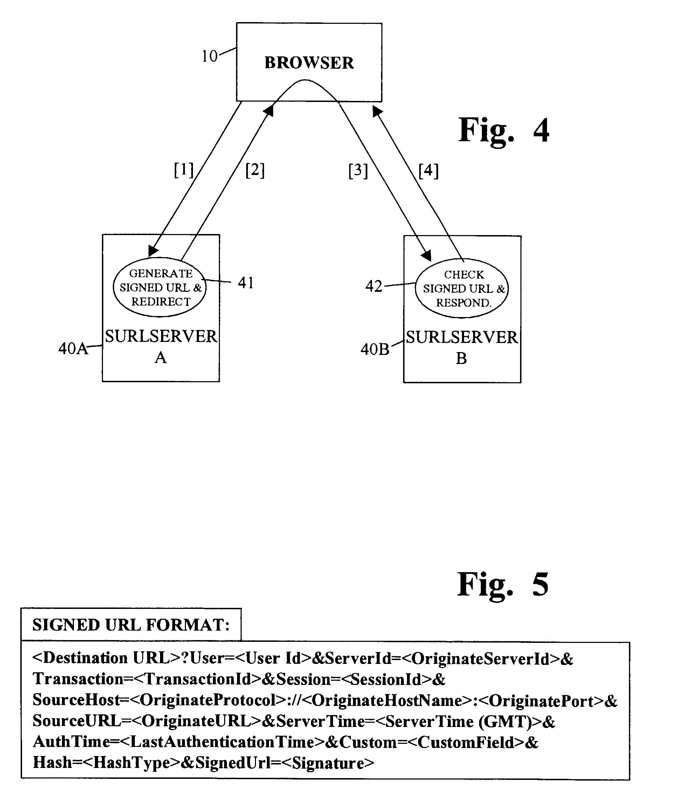

Figure 3 illustrates the situation of a user accessing a multi-homed resource that is split across two servers 11A and 11B (servers A and B). To minimise the inconvenience of sucha split, the HTTP redirection mechanism may be used by which if server A receives a request for a resource page that has been moved to server B, it will cause the browser 10 to automaticaly go to server B. Server A acieves this by returning a Response that includesa redirection status code in the status line of the Response, and the target URI in a location field of the response header.

A difficulty arises, however, when access to the desired resource is protected by a user-authenticaton process, this process being run on both server A and server B (as respective authentication processes 20A and 20B). Whilst cookies can be used to automatically authenticate users across two or more servers, this mechanism only works if the servers are in the same network domain. In the Figure 3 example, the servers 11A and 11B are in different domains so that the cookie mechanism cannot be used. As a result, when a user who has signed on at server A in order to access part of a multi-homed resource, wants to access a part of this resource that resides on server B, the user must sign on again at server B.

It may also be noted that even if servers A and b were in the same domain, the use of a cookie as a mechanism for avoiding the need to re-autnticate a user switching between servers, i far from ideal as users have the ability to turn of this feature of their browsers so its presence cannot be assumed.

It is an object of the present invention to provide a convenient authentication mechanism spanning two servers visited by the same agent.

### Summary of the Invention

According to the present invention, there is provided an authentication method between first and second servers visited by the same agent, wherein:
-- following access by the agent to the first server, the latter directs the agent to the second server by returning to the agent a URI that points to the second server, the URI including a signature adapted to guarentee that at least the signature of the URI originates from a server belonging to a qualified set of servers that has at least said one server as a member,
-- the agent uses the URI returned by the first server to access the second server with a request including that URI, and
-- on receiving the request including said URI with its signature, the second server uses the received signature to check that at least the signature originates from within said qualified set of servers.

In one embodiment, the first server directs the agent to the second server by a redirection control code returned with the URI of the second server, the agent responding to the redirection control code to automatically generate and send said request to the second server. In another embodiment, the first server directs the agent to the second server by returning a page for display that includes a hyperlink which when activated causes the agent to generate said request.

The signature will generally be formed from data consisting of one or more elements each either included in the URI or already known to the second server. Advantageously, one element is a predetermined portion of the URI and the signature is adapted to guarentee the integrity of that predetermined portion and its origination from within the qualified set of servers; in this case, the second server can use the received signature to check the integrity of the predetermined portion of the received URI and its origination from within the qualified set of servers.

In one embodiment the first and second servers share a common secret which is not included in the URI but forms one element of the data used by the first server for generating the signature; the signature being generated at the first server by a process involving processing the data with a one-way function; and the second server carrying out its signature-based checking by:
(i) -- carrying out the same process as used by the first server when generating the signature, on data that consists of the same one or more elements as used in generating the signature, these one or more elements being available at the second server either in the received URI or as already known, and
(ii) -- comparing the result obtained in step (i) with the received signature.

In another embodiment, the first server holds the private key of a private-key/public key pair and second server knows the public key of this pair; the signature being generated by the first server by a process involving processing said data with a one-way function, and encrypting the result with its private key; and the second server carrying out its signature-based checking by:
(i) -- carrying out the same one-way function as used by the first server in generating the signature, on data that consists of the same one or more elements as used in generating the signature, these one or more elements being available at the second server either in the received URI or as already known,
(ii) -- decrypting the received signature using the public key, and
(iii) -- comparing the decrypted signature obtained in step (ii) with the result obtained in step (i).

One application of the method is to provide a "single sign-on" capability to a multi-homed site where access to the individual servers of the site (the first and second servers) is restricted by respective user authentication processes. In this application, the user authentication process of the second server is satisfied by a agent accessing the second server by a request including said URI with its signature where the signature confirms its origination at the first server.

Where the signature is generated using data forming a predetermined portion of the URI, the method can b eused in a number of applications all involving the authentication of information passed from the first server to the second in the signed URI. In these applications, the second server only acts upon information present in the predetermined portion of the received URI after checking that the received signature confirms the integrity of said predetermined portion and its origination at the first server. The transferred information may comprise identification information relating to the agent.

The transferred information may additionally or alternatively comprise transactional information relating to a transaction being conducted by the agent, the transaction involving a first part with the first server and a second part with the second server with the second part using the transactional information transferred from the first server.

### Brief Description of the Drawings

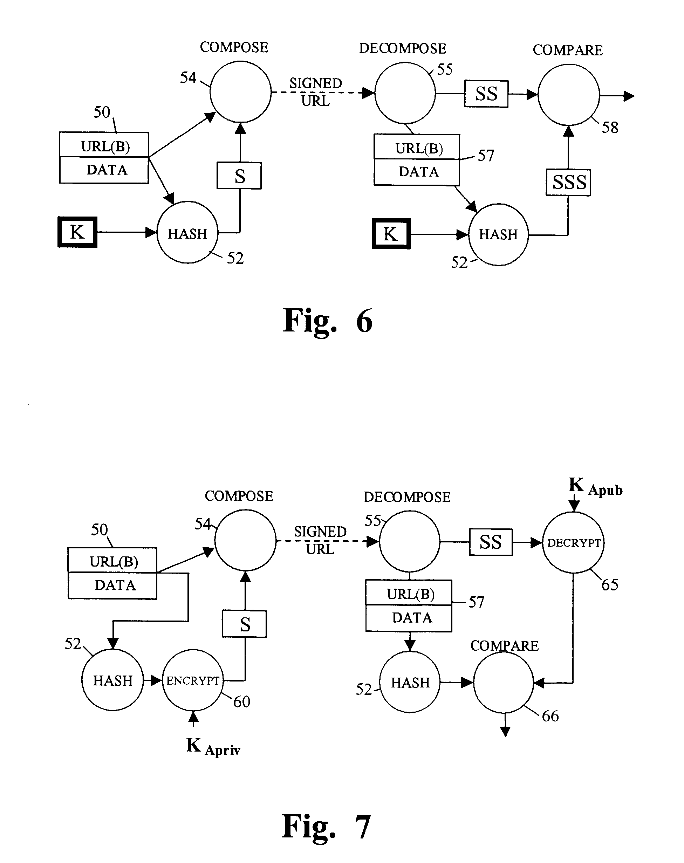

Embodiments of the invention will now be described, by way of non-limiting example, with reference to the accompanying diagrammatic drawings, in which:
. **Figure 1** is a diagram illustrating the exchange of HTTP requests and responses between a browser and server;
. **Figure 2** is a diagram illustrating a user-authentication process using cookies to facilitate subsequent accesses during the same session;
. **Figure 3** is a diagram illustrating the access of a browser to a multi-homed site;
. **Figure 4** is a diagram illustrating the use of a signed URL in accordance with the present invention;
. **Figure 5** is a diagram showing a preferred format of the signed URL used in Figure 4;
. **Figure 6** is a diagram illustrating a first method of forming a signed URL and subsequently using it to effect integrity and origination checks; and
. **Figure 7** is a diagram illustrating a second method of forming a signed URL and subsequently using it to effect integrity and origination checks.

### Best Mode of Carrying Out the Invention

Figure 4 illustrates the basics of the present invention and shows a user agent (browser) 10 which can communicate using the HTTP protocol with first and second HTTP servers 40A and 40B (referred to below as Surlserver A and Surlserver B where "Surl"stands for "Signed URL" for reasons which will become apparent below). For simplicity it will be assumed that Surlservers A and B each only host one site.

Assume that browser 10 has sent [1] a Request to Surlserver B (that is, to a resource of the hosted site). For whatever reason (and illustrative reasons are given below), Surlserver A determines that the browser 10 should be directed to Surlserver B to service the Request. Surlserver A therefore returns [2] a Response including the URI of a target resource on Surlserver B. This URI includes, as normal, the http_url of the target resource and any query data contained in the original Request that it may be appropriate to transfer. However, in addition, the URI has further data appended in query format. The contents of this further data will depend on surrounding circumstances but will always include a signature formed by processing a predetermined portion of the URI. This predetermined portion may be all or part of the URI excluding the signature itself. Two ways of forming the signature will be described below with respect to Figures 6 and 7; what is important is that the signature is formed in a way enabling it to be used to check the integrity of the aforesaid predetermined portion of the URI and its origination from the Surlserver A (or, in certain cases, from a larger set of Surlservers that have some common quality of interest to the Surlserver B).

The URI including the signature forms what is termed herein as a "signed URL". Process 41 run by Surlserver A is responsible for forming the signed URL and including it in a Response returned to browser for directing the latter to Surlserver B.

How the signed URL is included in the Response will depend on how the browser is to be directed to Surlserver B. If the redirection capability of the HTTP protocol is used, then the signed URL is included in the location field of the response header and the status line includes the appropriate redirection status code. In this case, browser 10 on receiving the Response from Surlserver A will automatically send [3] a Request to Surlserver B using the signed URL from the Response as the URI in the request line of the Request. Alternatively, Surlserver A can include the signed URL in a hyperlink contained in a page returned to browser 10 in the message body of the Response. In this case, when a user activates the hyperlink, the browser sends [3] a Request to Surlserver B, again with the signed URL as the URI in the request line of the Request.

On receiving such a request from the browser 10, a process 42 run on Surlserver B extracts the signature and uses it to check the origin and integrity of the aforesaid predetermined portion of the URI . The Surlserver B then returns [4] a Response to browser 10, the nature of this Response depending on the outcome of the check carried out by process 41.

This general "signed URL" mechanism can be put to use in a number of ways as will be exampled below. However, before doing so, a preferred format for a signed URL will be described with reference to Figure 5. More particularly, as well as the http_url of the destination server (Surlserver B in Figure 4), the signed URL of Figure 5 include s a query made up of a number of parameter name/value pairs the last one of which is the signature itself (SignedUrl= < Signature > ). The first nine name/value pairs contain data about the user/user agent that generated the initial Request, the server generating the signed URL, and their interaction. A brief explanation of each of these first nine parameters is given below:
- User :: a string representing the user
- ServerId :: a string repesenting the server effecting re-direction (that is, Surlserver A in Figure 4)
- Transaction :: current transaction between user agent and server (SurlserverA)
- Session :: current session between user agent and server (Surlserver A)
- SourceHost :: host name of server effecting re-direction (Surlserver A)
- SourceURL :: the URI trigerring the re-direction
- ServerTime :: GMT time at server effecting re-direction (SurlserverA)
- AuthTime :: time of generation of signed URL
- Hash :: identifier of hash function used in generating signature.

Finally, the penultimate parameter name/value pair (Custom= <CustomField>) is optional and contains any relevant query data received in the Request being re-directed.

For the Figure 5 signed URL, the signature is formed by processing all elements other than the final name/value pair.

Two applications of the general mechanism illustrated in Figure 4 will now be described with reference to the interactions [1] to [4] shown in that Figure.

### Single Sign-On (Basic)

In Figure 4 Surlservers A and B host respective sites; assume now that both sites have restricted access provided by respective user authentication processes at the Surlservers A and B. However, the Surlserver B site is willing to accept anyone authenticated for the Surlserver A site without requiring them to undergo re-authentication. Consider a user who has already successfully gone through the sign on process at Surlserver. Surlserver A thereafter uses a cookie to facilitate further accesses by the user for browsing the site. If now the user wants to go to the Surlserver B site (for example, to complete a transaction started on Surlserver A), the Surlserver A site gives the user the opportunity to do so by presenting the user with a page including a link "Go to resource B" which points to a page "go_to_serverB.html" on Surlserver A. Upon the user activating the link the following actions occur:
[1] - a Request is sent for "go_to_serverB.html" on SurlserverA;
[2] - Surlserver A has been configured to redirect every request to "go_to_serverB.html" to check process 42 on Surlserver B, this process being at http_url:
   http://www.SurlserverB.com/cgi.bin/checkB. To do this, process 41 of Surlserver A forms a signed URL in the Figure 5 format and returns a Response with the signed URL in the location field of the response header and a redirection status code set in the status line of the Response.
[3] - Browser 10 on receiving the Response sends a Request to Surlserver B with the signed URL as the URI in the request line. Surlserver B is configured to submit every Request directed to cgi.bin/checkB to the process 42. If this process indicates that the signed URL in the Request comes from Surlserver A then the Surlserver B site knows it can trust the user agent 10 (Surlserver A having already carried out user authentication). As a result, the user is not asked to sign on again in order to access the site hosted on Surlserver B.
[4] - When the signed URL has been successfully checked, Surlserver B returns a Response to browser 10 using this response to set a cookie for subsequent accesses by browser 10.

### Signed Information

The site hosted on Surlserver B may not in fact care who is accessing it - instead, this site may care much more about receiving valid information from the site on Surlserver A, typically about a transaction involving the user. Again the general signed-URL mechanism of Figure 4 is well suited to giving the reassurance sought by the site on Surlserver B. Consider a scenario in which Surlserver A hosts the web site of a merchant featuring e-commerce for software products. This site has a catalog and on-line purchasing but the software supplier company does license management through its site on Surlserver B. Once the customer (user of browser 10) has bought the software he/she wants, the customer needs to be sent to the supplier's site. Thus:
[1] -- Customer has just bought a software product at the merchant's site on Surlserver A and has received back a page with all the order data (for example, order number: 8928QW8) and an instruction to follow a hyperlink to retrieve the license number. This hyperlink has URI :
   http://www.SurlserverA.com/Get_license.html?Order = 8928QW8 The customer activates this link to send a Request to Surlserver with the above URI in the request line.
[2] - Surlserver A has been configured to redirect every request to "Get_license.html" to a process 42 on Surlserver B at http_url:
   http://www.SurlserverB.com/cgi.bin/Generate_License To do this, process 41 of Surlserver A forms a signed URL in the Figure 5 format with the order number from the Request query now placed in the CustomField. Surlserver A then returns a Response with the signed URL in the location field of the response header and a redirection status code set in the status line of the Response.
[3] - Browser 10 on receiving the Response sends a Request to Surlserver B with the signed URL as the URI in the request line. Surlserver B is configured to submit every Request directed to cgi.bin/Generate_License to the process 42. This process involves checking that the contents of the signed URL against its signature to ensure the integrity of the data carried by signed URL and its origination at Surlserver A..
[4] - When the signed URL has been successfully checked, Surlserver B returns a Response to browser 10 with an html page including the license number for the customer.

In fact, the single sign-on process described above will generally also involve using signed information passed from Surlserver A to Surlserver B. Indeed, as described above, the single sign-on process did pass signed information because it used the Figure 5 signed-URL format which, as already described, includes multiple parameter name/value pairs. However, the use of this information was not referred to; in practice information such as AuthTime will be used by Surlserver B during a single sign-on check. In particular, AuthTime will be used to check whether the validity of the signed URL has time expired, that is, whether or not the last user authentication was too long ago to still be considered valid; the integrity of the AuthTime needs to be authenticated because it would be an easy matter for a user to change this parameter.

A more sophisticated form of single sign-on may be implemented in which Surlserver B does not automatically accept a user because the user has been passed to it from Surlserver A but, instead, Surlserver B carries out its own user authentication based on user data passed to it from Surlserver A in a signed URL. In this case, Surlserver is trusting the integrity of data passed to it by Surlserver B but is making its own judgements based on that data.

### Signature Generation

Figure 6 illustrates a first method of signature generation and checking. In this method, the generation and checking processes (carried out by Surlservers A and B respectively in Figure 4) share a common secret K. Signature generation involves combining the http-url and query (data) parts 50 of the planned URI (excluding the signature) together with the common secret K and subjecting them to a one-way function such as a one-way hash function 52 (for example, MD5 or SHA1) to produce a signature S. This signature is added (54) to the rest of the URI and sent as the signed URL. Checking the signed URL on receipt involves decomposing (55) the received signed URL into the received signature SS and the remainder 57 of the signed URL (which should correspond to part 50). This remainder is combined with the common secret K and the result is then subject to the same one-way function 52 as used upon signature generation to produce a regenerated signature SSS. The regenerated signature SSS is compared (58) with the received signature SS and if they match, the signed URL is taken as coming from the entity known to have the common secret K (or from within a group of such entities where multiple entities have the same key); the integrity of the remainder 57 is also taken as proven.

Figure 7 illustrates a second method of signature generation and checking. In this method, the generating entity (Surlserver A in Figure 4) holds the private key K_{Apriv} of a private/public key pair (for example, for the RSA encryption algorithm) whilst the checking entity (Surlserver B) knows the public key K_{Apub}. Signature generation involves combining the http-url and query (data) parts 50 of the planned URI (excluding the signature) and subjecting them to a one-way function such as a one-way hash function 52 (for example, MD5 or SHA1). The result of this process is encrypted (60) using the private key K_{Apriv} to produce a signature S that is then added (54) to the rest of the URI and sent as the signed URL. Checking the signed URL on receipt involves decomposing (55) the received signed URL into the received signature SS and the remainder 57 of the signed URL (which should correspond to part 50). This remainder is subject to the same one-way function 52 as used upon signature generation and the result compared (66) with the received signature after the latter has been decrypted using the public key K_{Apub}. If a match is achieved, the signed URL is taken as coming from the entity known to have the private key K_{Apriv} (or from within a group of such entities where multiple entities have the same key); the integrity of the remainder 57 is also taken as proven.

### Variants

It will be appreciated that many variants are possible to the above-described embodiments of the present invention.

For example, if the receiving Surlserver B is only interested in knowing whether the agent has been directed to it from SurlserverA, then all that is needed is for Surlserver B to be able to confirm that the signature of the received URI originates from Surlserve r A. Indeed this is what is happening in the "Single Sign-On (Basic)" process described above. This basic functionality can in fact be achieved even without there being a need for the data used to generate the signature being precisely known to both servers. More particularly, the signature can be formed by simply having Surlserver A encrypt a data element with its private key (without prior application of a one-way hash function), Surlserver B then decrypting the signature with its public key. All Surlserver B needs to know about the data element used to form the signature is some discernible characteristic that distinguishes the decrypted data in some way. For example, if the data element is a time stamp then Surlserver B need only know this fact without having any idea of the time value concerned - this is because it remains improbable that anyone not knowing the private key could generate anything looking like a timestamp when decrypted by the public key of Surlserver A.

In order to make it possible to protect against replay attacks, each signature formed (in whatever manner) by Surlserver A preferably includes a component that is different each time the signature is formed (though it will be understood that there will generally be a limited range of possible values of this component so that for practical embodiments using, for example, a timestamp or pseudo-random-binary-sequence as the varying component, there will be a theoretical chance of two signatures being identical).

As already indicated, Surlserver B may not actually be interested in knowing that the signed URL originates from a particular server but, rather, that it comes from a server within a qualified set of Surlservers. This can be readily achieved by giving the same common secret / private key to all servers of this set (depending on whether the Figure 6 or Figure 7 signature generation method is used).

Furthermore, although the invention has been described above in relation to a user agent (browser 10) interacting with Surlservers, the invention is usable with other agents such as a server-side CGI program.

Further security (and in particular, confidentiality) can be provided by using SSL for the exchanges between the user 10 and the Surlservers A and B.

## Claims

1. An authentication method between first and second servers visited by the same agent, wherein:
-- following access by the agent to the first server, the latter directs the agent to the second server by returning to the agent a URI that points to the second server, the URI including a signature adapted to guarentee that at least the signature of the URI originates from a server belonging to a qualified set of servers that has at least said one server as a member,
-- the agent uses the URI returned by the first server to access the second server with a request including that URI, and
-- on receiving the request including said URI with its signature, the second server uses the received signature to check that at least the signature originates from within said qualified set of servers.

2. A method according to claim 1, wherein the first server directs the agent to the second server by a redirection control code returned with the URI of the second server, the agent responding to the redirection control code to automatically generate and send said request to the second server.

3. A method according to claim 1, wherein the first server directs the agent to the second server by returning a page for display that includes a hyperlink which when activated causes the agent to generate said request.

4. A method according to claim 1, wherein the signature is formed from data consisting of one or more elements each either included in the URI or already known to the second server.

5. A method according to claim 1, wherein one said element of the data used for forming the signature is a predetermined portion of the URI, the signature being adapted to guarentee the integrity of that predetermined portion and its origination from within said qualified set of servers; the second server using the received signature to check the integrity of said predetermined portion of the received URI and its origination from within said qualified set of servers.

6. A method according to claim 4 or claim 5, wherein the first and second servers share a common secret which is not included in said URI but forms one said element of the data used by the first server for generating the signature; the signature being generated at the first server by a process involving processing the data with a one-way function; and the second server carrying out its signature-based checking by:
(i) -- carrying out the same process as used by the first server when generating the signature, on data that consists of the same one or more elements as used in generating the signature, these one or more elements being available at the second server either in the received URI or as already known, and
(ii) -- comparing the result obtained in step (i) with the received signature.

7. A method according to claim 4 or claim 5, wherein the first server holds the private key of a private-key/public key pair and second server knows the public key of this pair; said signature being generated by the first server by a process involving processing said data with a one-way function, and encrypting the result with said private key; and the second server carrying out its signature-based checking by:
(i) -- carrying out the same one-way function as used by the first server in generating the signature, on data that consists of the same one or more elements as used in generating the signature, these one or more elements being available at the second server either in the received URI or as already known,
(ii) -- decrypting the received signature using the public key, and
(iii) -- comparing the decrypted signature obtained in step (ii) with the result obtained in step (i).

8. A method according to claim 1, wherein the first server holds the private key of a private-key/public key pair and second server knows the public key of this pair; said signature being generated at the first server by encrypting with said private key a data element that is not included in uncrypted form in the URI but at least characteristics of which are known to the second server; and the second server carrying out its signature-based checking by:
(i) -- decrypting the received signature using the public key, and
(ii) -- comparing the decrypted form of said data element obtained in step (i) with the what is known by the second server about this element.

9. A method according to any one of claims 4 to 8, wherein the signature is formed from data that has a component that is different each time the signature is generated.

10. A method according to any one of the preceding claims, wherein access to the first and second servers is restricted by respective user authentication processes, the user authentication process of the second server being satisfied by a agent accessing the second server by a said request including said URI where the signature-based checking carried out by the second server using the signature containing in the URI confirms that at least said signature originates at said first server.

11. A method according to claim 5 or any claim dependent thereon, in which the first server passes information to the second server in said predetermined portion of the URI and the second server only acts upon this information as present in the predetermined portion of the received URI after checking that the received signature confirms the integrity of said predetermined portion and its origination at said first server.

12. A method according to claim 11, wherein access to the second server is restricted by a user authentication process and said information includes identification information relating to the agent which the authentication process uses, after its integrity has been checked, to determined if the agent is to be allowed access to the second server.

13. A method according to claim 11, wherein said information includes transactional information relating to a transaction being conducting by the agent, this transaction involving a first part with said first server and a second part with said second server with the second part using said transactional information included in said predetermined portion by the first server.

14. A method according to claim 5 or any claim dependent thereon, wherein said predetermined portion of the URI is the whole URI other than said signature.

15. A method according to claim 5 or any claim dependent thereon, wherein said predetermined portion of the URI includes a timestamp, the second server using the timestamp in checking whether the significance of the received URI has time expired.

16. A method according to any one of the preceding claims, wherein the agent communicates with the the first and second servers using an encrypted messaging scheme.
